# EUROPEAN PATENT SPECIFICATION

(11) **EP 3 157 831 B1**
(45) Date of publication and mention of the grant of the patent: **31.07.2019**
(21) Application number: 15732438.5
(22) Date of filing: 10.06.2015
(51) Int. Cl.: B65D 41/20, B29C 45/16, A61J 1/06

(54) **STRIPS OF VIALS FOR FLUID PRODUCTS, PARTICULARLY FOR MEDICAL, PHARMACEUTICAL, COSMETIC, FOOD PRODUCTS OR THE LIKE**
PHIOLENSTREIFEN FÜR FLÜSSIGPRODUKTE, INSBESONDERE FÜR MEDIZINISCHE, PHARMAZEUTISCHE, KOSMETISCHE, LEBENSMITTELPRODUKTE UND DERGLEICHEN
BANDES DE FLACONS POUR PRODUITS FLUIDES, NOTAMMENT DES PRODUITS MÉDICAUX, PHARMACEUTIQUES, COSMÉTIQUES, ALIMENTAIRES OU ANALOGUES

(30) Priority: 20.06.2014 IT MO20140185; 31.07.2014 IT MO20140229
(43) Date of publication of application: 26.04.2017
(73) Proprietor: LAMEPLAST S.p.A., 41016 Novi di Modena (MO) (IT)
(72) Inventor: FONTANA, Antonio, I-41012 Carpi (MO) (IT)
(74) Representative: Brunacci, Marco
(86) International application number: PCT/IB2015/054393
(87) International publication number: WO 2015/193773

(56) References cited:
- EP-A1- 1 044 135
- WO-A1-2007/144741
- WO-A1-2009/144553
- WO-A1-2012/014028
- WO-A1-2013/163264
- WO-A2-2005/118251
- WO-A2-2007/107826
- FR-A1- 2 981 556
- GB-A- 2 106 878
- GB-A- 2 192 578
- US-A- 4 385 025

## Description

### Technical Field

The present invention relates to a strip of vials for fluid products, particularly for medical, pharmaceutical, cosmetic, food products or the like.

### Background Art

With particular but not exclusive reference to the pharmaceutical and/or cosmetic industries, the use is known of vials made of plastic material, generally polymer material, for the packaging of one or more doses of fluid, liquid or pasty products.

The known vials generally comprise a containment body of a predetermined dose of product, of a substantially tubular and elongated shape, which has an end provided with a neck at the top of which is defined a product dispensing mouth.

The opposite end of the containment body has an opening able to introduce the product, which is closed after filling, e.g., by sealing.

Closing means, removably associable with the vials at the neck, allow occluding the dispensing mouth.

The containment body and the closing means can be made separately using forming techniques such as injection molding, and subsequently assembled together, or, alternatively, they can be made in a single body piece and subsequently separated before being used by a user.

The containment body also has a pair of fins which are able to make it easier for the user to grip the vial, and which extend, in a diametrically opposite direction the one to the other, from the outer lateral surface of the containment body itself.

For reasons of production and more convenient transport, the known vials in plastic material are usually made in series to form a so-called "strip"; the fins of the containment bodies of two successive vials are in fact temporarily associated with one another at easy-to-tear weakened-section connection lines, which permit separating one vial from another.

Strips of this type are shown, e.g., in patent document WO 2009/147484, wherein at the vial dispensing mouths, applicator elements are provided, which are spatula shaped or with other shape and which help the user to distribute the fluid product coming out of the dispensing mouths.

Such applicator elements can be made separately from the containment bodies or in a single body piece with them.

In the first case, however, it is underlined that the applicator elements and the containment bodies must be assembled after manufacturing, either by the manufacturer or by the end user and this, inconveniently, represents an additional operation.

In the second case, on the other hand, the applicator elements and the containment bodies must necessarily be made from a same material, and this is a big restriction as regards the operating versatility of the applicator elements, considering that the need is often felt to have containers with parts having different characteristics from others.

In this regard, it is underlined e.g., that in the medical field, the use is often required of sterile fluids such as medicinal products, pharmaceutical products, saline solutions and so on, to be injected intravenously into patients.

These sterile fluids are normally supplied in large glass or plastic bottles, which are chemically inert materials able to safeguard the sterility of the fluids contained in them.

The bottles are normally closed by means of a closing element called "stopper", which is inserted in the bottle access mouth.

The closing element is made of rubber to allow penetration by means of a pointed drawing element, such as, e.g., the needles of hypodermic syringes and the spikes of infusion lines, thereby permitting the drawing and exit of the sterile fluid.

Bottles of this type are described in EP 0 819 617, EP 1 044 135 and WO 2009/144553.

WO2012014028 discloses a container comprising an elongated hollow body wherein on the outer surface is defined a pair of gripping fins associable in a removable way with the gripping fins 3 of one or more adjacent containers. An extremity of the hollow body extends to a neck having a dispensing mouth for the outflow of the fluid product. The closing of the dispensing mouth is made by means of special closing means comprising a flat-plane gripping element. A shutter pin extends from the flat-plane gripping element and it can be fitted into the dispensing mouth. When using the first time, the shutter pin is removed from the dispensing mouth while the collar, after the breaking of the breakable bridges, remains fitted on the neck 4 with a "tamper-evident" function to demonstrate that opening has occurred.

### Description of the Invention

The main aim of the present invention is to provide a strip of vials for fluid products, particularly for medical, pharmaceutical, cosmetic, food products and the like, which may be manufactured in an easy, functional and economical manner and is, at the same time, of increased convenience and versatility of use with respect to the products of known type.

Another object of the present invention is to provide a strip of vials for fluid products, particularly for medical, pharmaceutical, cosmetic, food products and the like, which allows to overcome the mentioned drawbacks of the prior art within the ambit of a simple, rational, easy and effective to use as well as affordable solution.

The above mentioned objects are achieved by the present strip of vials for fluid products, particularly for medical, pharmaceutical, cosmetic, food products and the like, having the characteristics of claim 1.

### Brief Description of the Drawings

Other characteristics and advantages of the present invention will become more evident from the description of some preferred but not exclusive alternatives of a strip of vials for fluid products, particularly for medical, pharmaceutical, cosmetic, food products and the like, illustrated as an indicative, but not limitative example in the accompanying drawings wherein:
Figure 1 is an axonometric view, partially in section, of a strip which does not form a part of the invention;
Figure 1a is an axonometric view, partially in section, of an embodiment of a strip according to the invention
Figure 2 is an axonometric view, partially in section, of a strip which does not form a part of the invention.
Figure 3 is an axonometric view, partially in section, of a strip which does not form a part of the invention.
Figure 4 is an axonometric, schematic and partial view of the forming mold, in the open configuration, provided for the manufacture of the strip of Figure 2;
Figure 5 is an axonometric, schematic and partial view of the mold of Figure 4, in the closed configuration;
Figures 6 and 7 are axonometric, schematic and partial views illustrating in sequence the operation of the mold of Figure 4;
Figures 8 and 9 are sectional views illustrating in sequence the operation of a detail of the mold of Figure 4;
Figure 10 is an axonometric, schematic and partial view of the forming mold, in the open configuration, provided for the manufacture of the strip of Figure 3;
Figure 11 is an axonometric, schematic and partial view of the mold of Figure 10, in the closed configuration;
Figures 12 and 13 are sectional views illustrating in sequence the operation of a detail of the mold of Figure 10.

### Detailed description

With particular reference to such figures, the reference number 1 globally designates a strip of vials for fluid products, particularly for medical, pharmaceutical, cosmetic, food products and the like.

In this respect, it is specified that in the present treatise, by the term "fluid products" are not only meant liquid products but also viscous products, e.g., in the state of paste or gel, and powdered products, in particular very fine powders with great fluidity.

It is underlined however that the strip 1 according to the invention is intended to contain injectable fluid products, i.e. mostly sterile fluid products, such as medicinal products, pharmaceutical products, saline solutions, and so on, to be injected intravenously into patients.

The strip 1 comprises a group of vials 2, each comprising:
- at least a containment body 4 for at least a fluid product having an elongated direction D defined by a longitudinal central axis;
- a first end 4a able to define a dispensing mouth 5 of the fluid product; and
- a second end 4b opposite the first end 4a.

The containment bodies 4 are made in a single monolithic body made of a first material and are joined together along weakened-section connection lines 3.

In particular each vial 2 has at least a spacing fin 6, normally two, extending from the respective containment body 4 and which is associated with at least a spacing fin 6 of an adjacent vial 2 along one of the weakened-section connection lines 3.

Conveniently, the second ends 4b of the vials 2 are open and can be used as mouths for introducing the fluid product; the closing of the mouths is achievable, e.g., by crushing and sealing the relative edges and is done once the fluid product has been introduced, before introducing the strip 1 onto the market.

The dispensing mouths 5 consist of a stopper 24 made of a second penetrable material able to be penetrated by a drawing element for the drawing and exit of the fluid product.

The drawing element is not illustrated in detail in the figures and consists e.g. of a syringe needle, in a spike of infusion line or similar devices.

The first material composing the containment bodies 4 preferably consists of a plastic material, e.g., a polymer material, such as polyethylene, polypropylene, etc.

The second material composing the stopper 24, on the other hand, consists of rubber or other material, also a polymer material, having similar properties which allows its penetrability by needles, spikes and the like.

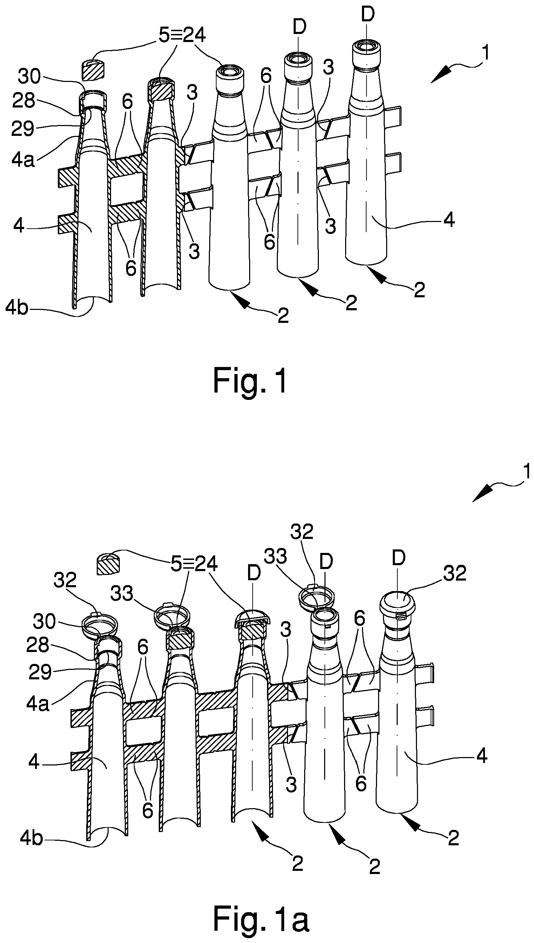

In Figures 1, 1a, 2 and 3 four different alternatives of the strip 1 are shown. In the first alternative the containment bodies 4 comprise retaining means 28, 29, 30 which are able to retain the stoppers 24 and are arranged at the first ends 4a.

The retaining means 28, 29, 30 consist, e.g., of at least an interlocking housing seat, which is formed on each containment body 4 and in which a corresponding stopper 24 is fitted by interlocking.

Each interlocking housing seat 28, 29, 30 is formed by a tubular length 28 which axially extends along the elongated direction D and has a first recess 29 and a second recess 30 which extend transversely from the tubular length 28 to the longitudinal central axis D.

The stoppers 24 have dimensions substantially complementary to those of the tubular length 28 and, therefore, the recesses 29, 30 define two abutment portions for the stoppers 24 which prevent their extraction in one direction and in the other.

At least one of the first recess 29 and the second recess 30 has a substantially annular conformation.

In the alternative shown in Figure 1, both the recesses 29, 30 of each interlocking housing seat 28, 29, 30 have a substantially annular shape and, in particular:
- the first recess 29 connects the tubular length 28 to the rest of the containment body 4 and defines a support step of the relative stopper 24 once this has been introduced within the interlocking housing seat 28, 29, 30;
- the second recess 30, on the other hand, is arranged at the opposite end of the tubular length 28 with respect to the first recess 29 and defines an annular edge through which the relative stopper 24, arranged within the interlocking housing seat 28, 29, 30, remains accessible from the outside for the introduction of the drawing element.

Through the second recesses 30, furthermore, the stoppers 24 are forced to enter into the interlocking housing seat 28, 29, 30 during assembly.

In this regard it is noticed that the strip 1 shown in Figure 1 is intended to be made in separate pieces to be assembled together.

In particular, the containment bodies 4 are made by injection molding, in which the first material, suitably brought to a fluid state, is injected under pressure into a forming mold and then made to harden.

The stoppers 24 are also made by molding, in which the second material, suitably processed, is shaped into a forming seat different to the forming mold in which the containment bodies 4 have been formed.

Once extracted from the forming seat, the stoppers 24 are mounted on containment bodies 4 forcing the passage through the second recesses 30.

In the second alternative shown in figure 1a defining an embodiment of the invention, the containment bodies 4 and the stoppers 24 are identical to those shown in Figure 1, the detailed description of which is integrally provided.

The embodiment of Figure 1a differs from the previous one by the fact that each vial 2 also comprises a covering body 32 able to cover the relevant stopper 24. The covering bodies 32 are made in a single monolithic body together with the containment bodies 4.

In the embodiment shown in Figure 1a, each covering body 32 is defined by a respective door element and, for this reason, in the ambit of the present treatise the reference number 32 is used both to indicate the covering bodies and the door elements.

The door elements 32 are associated with the first end 4a by means of a foldable joining strap 33.

In particular, the door elements 32 are movable around the relative foldable joining strap 33 between a closed configuration, wherein the door elements 32 are fitted interlocking on one of the dispensing mouths 5 to protect the stoppers 24, and an open configuration, wherein the door elements 32 are moved away from the dispensing mouths 5 thus making the stoppers 24 accessible from the outside.

Similarly to the alternative of Figure 1, also the strip 1 of Figure 1a is intended to be made in separate pieces to be assembled together, according to the following rules:
- the containment bodies 4 and the covering bodies 32 are made by injection molding of the first material inside a forming mold. When exiting the mold the covering bodies 32 are in the open configuration;
- the stoppers 24 are made by molding of the second material inside a molding seat different from the forming mold in which the containment bodies 4 and the covering bodies 32 are formed;
- once extracted from the molding seat, the stoppers 24 are mounted on the containment bodies 4 by forcing the passage thereof through the second recesses 30;
- bending the foldable joining straps 33, therefore, the covering bodies 32 are moved from the open configuration to the closed configuration to protect the stoppers 24, which remain inaccessible from the outside until when the end user opens the vials 2.

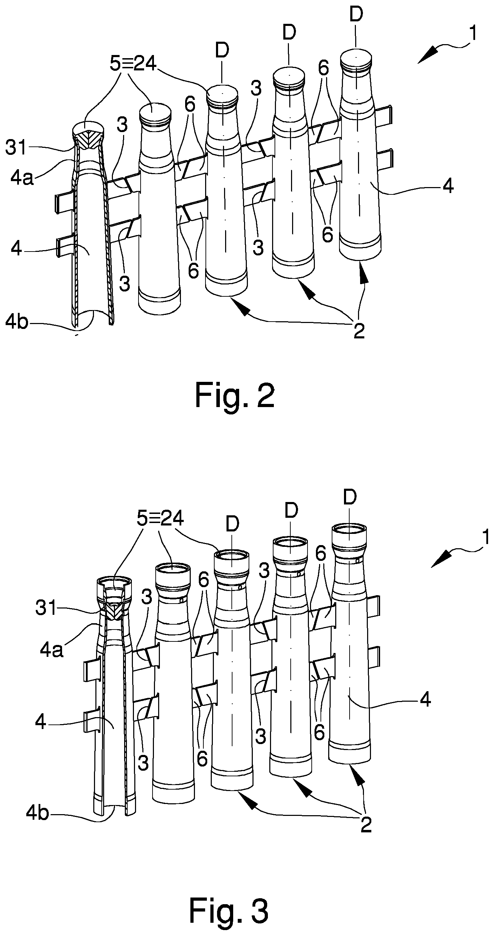

In the third alternative shown in Figure 2, the containment bodies 4 are devoid of the interlocking housing seats 28, 29, 30 and, in their place, at the first ends 4a have a countersunk seat 31 flared outwards, namely a concave seat having a concavity facing outwards.

The stoppers 24 are associated with the countersunk seat 31 by adhesion. In this regard it is noticed that, unlike the alternatives of Figures 1 and 1a, the strip 1 shown in Figure 2 is intended to be manufactured entirely into a single forming mold 7 by means of a manufacturing procedure that will be illustrated in detail below.

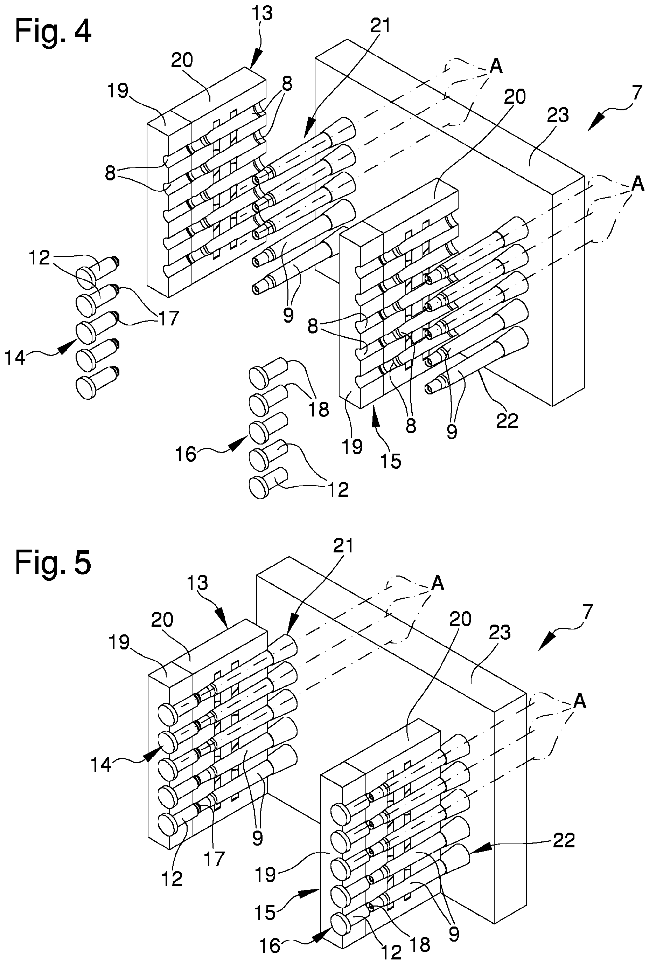

In particular, it should be noticed that the stoppers 24 are made by injection molding of the second material in the fluid state within the same forming mold 7 that shapes the containment bodies 4, and the first material and the second material are compatible so as to adhere to one another when the second material is injected under pressure directly in contact with the containment bodies 4. The manufacturing procedure of the strip 1 shown in Figure 2 is represented in Figures 4 to 9 and includes first of all a step that consists in providing the forming mold 7, which has a plurality of female housings 8 and of as many male elements 9 arranged along the corresponding longitudinal directions A, wherein the female housings 8 and the male elements 9 can be coupled together to define at least partially an interspace 10 for the forming of the strip 1.

The female housings 8, in practice, are intended to shape the outer surfaces of the strip 1, while the male elements 9 are intended to shape the internal surfaces thereof.

The longitudinal directions A of the male elements 9 are substantially parallel to one another and define the elongated direction D of the containment bodies 4 of the vials 2.

The strip 1 shown in Figure 2 has five vials 2, which are made by means of five female housings 8 and five male elements 9; it is easy to understand, however, that by changing the number of female housings 8 and of the male elements 9 strips 1 with a different number of vials 2 can be obtained.

For the forming of the strip 1 within the forming mold 7 the procedure is carried out which involves the following steps:
- injecting under pressure the first material in the fluid state within the interspace 10;
- making the first material harden within the interspace 10 to obtain a strip of semi-finished vials 11;
- modifying the shape of the interspace 10 at least at the first ends 4a of the vials 2. It should be clear that, in the context of this discussion, when it is stated that the interspace 10 is modified at the first ends 4a it is meant that the shape of that part of interspace 10 is modified which is intended to shape the strips 1 in the proximity of the first ends 4a of the vials 2;
- injecting under pressure the second material in the fluid state within the modified interspace 10 directly in contact with the strip of semi-finished vials 11;
- making the second material harden within the modified interspace 10 by making the second material adhere to the strip of semi-finished vials 11 to obtain the strip 1 of finished vials in which the containment bodies 4 are made in a single monolithic body made in the first material and the stoppers 24 are made in the second material.

In addition to the female housings 8 and to the male elements 9, the forming mold 7 has a plurality of auxiliary male bodies 12 insertable in the female housings 8 at the first ends 4a of the vials 2.

The auxiliary male bodies 12 inserted in the female housings 8 are substantially aligned with the longitudinal directions A of the male elements 9.

More in detail, the forming mold 7 has:
- a first group 13 of female housings 8 and a first group 14 of auxiliary male bodies 12, which in practice define a first station 13, 14 of the forming mold 7;
- a second group 15 of female housings 8 and a second group 16 of auxiliary male bodies 12, which in practice define a second station 15, 16 of the forming mold 7.

The first station 13, 14 has a different shape than the second station 15, 16.

In other words, the female housings 8 of the first group 13 have a different shape with respect to the female housings 8 of the second group 15 and/or the auxiliary male bodies 12 of the first group 14 have a different shape with respect to the auxiliary male bodies 12 of the second group 16.

In particular, in the manufacturing procedure shown in Figures 4 to 9, the female housings 8 of the first group 13 are substantially identical to the female housings 8 of the second group 15, while the auxiliary male bodies 12 of the first group 14 have a different shape with respect to the auxiliary male bodies 12 of the second group 16.

The auxiliary male bodies 12 of the first group 14, in fact, have a first face 17 turned towards the male elements 9 which is protruding overhanging towards the male elements themselves; the auxiliary male bodies 12 of the second group 16, on the contrary, have a second face 18 turned towards the male elements 9 which is flat.

Such difference is clearly visible in Figure 5, which shows the forming mold 7 in a closed configuration without the first material, the second material and the strip of semi-finished vials 11 inside it; in this figure, we can see that the shape of the interspace 10 delimited by the female housings 8, the male elements 9 and the auxiliary male bodies 12 in the first station 13, 14 is different from that of the second station 15, 16.

For each group 13, 15, the female housings 8 are formed on two respective openable half-shells 19, 20; for simplicity of representation in Figures 4 to 7 only one of the half-shells 19, 20 is shown for each of the two groups 13, 15. Conveniently, each half-shell 19, 20 comprises a block 19, wherein the auxiliary male bodies 12 can be housed, and a matrix die 20, wherein instead the male elements 9 can be inserted.

In the manufacturing procedure shown in the figures, the female housings 8 and the auxiliary male bodies 12 are movable with respect to each other to allow opening the forming mold 7.

In particular, the auxiliary male bodies 12 are movable with respect to the blocks 19, which are integral with the matrix dies 20.

Alternative manufacturing procedures cannot however be ruled out wherein the auxiliary male bodies 12 are integral with the blocks 19 and, together with these, move with respect to the matrix dies 20.

In this latter case, for example, alternatives are possible wherein the female housings 8 of the first group 13 and the auxiliary male bodies 12 of the first group 14 are made in a single body piece, and/or wherein the female housings 8 of the second group 15 and the auxiliary male bodies 12 of the second group 16 are made in a single body piece.

For example, in fact, the blocks 19 may be shaped so as to integrate the auxiliary male bodies 12 in a single monolithic body.

The step of the procedure that consists in modifying the shape of the interspace 10 comprises moving the male elements 9 from the first station 13, 14, wherein the male elements 9 are inserted in the female housings 8 of the first group 13 together with the auxiliary male bodies 12 of the first group 14, to the second station 15, 16, wherein the male elements 9 are inserted in the female housings 8 of the second group 15 together with the auxiliary male bodies 12 of the second group 16.

In detail, the forming mold 7 has a first group 21 of male elements 9 and a second group 22 of male elements 9 alternately movable between the first station 13, 14 and the second station 15, 16.

The first group 21 and the second group 22 of male elements 9, e.g., are mounted on the same male-bearing element 23.

The male-bearing element 23, e.g., consists of a plate on which the male elements 9 of the first group 21 and the male elements 9 of the second group 22 are mounted with the longitudinal directions A substantially orthogonal to the plate itself.

The plate 23 is movable at least in rotation around an axis of rotation R substantially parallel to the longitudinal directions A.

The step of the procedure that consists in moving the male elements 9 comprises moving the male elements 9 of the first group 21 from the first station 13, 14 to the second station 15, 16 and simultaneously moving the male elements 9 of the second group 22 from the second station 15, 16 to the first station 13, 14, and vice versa.

Such step occurs, e.g., by making the plate 23 rotate around the axis of rotation R.

The step of the procedure consisting of injecting under pressure the first material occurs at the first station 13, 14, while the step of injecting the second material occurs at the second station 15, 16.

To form the strip 1 shown in Figure 2, the forming mold 7 is closed and the first material is injected into the first station 13, 14.

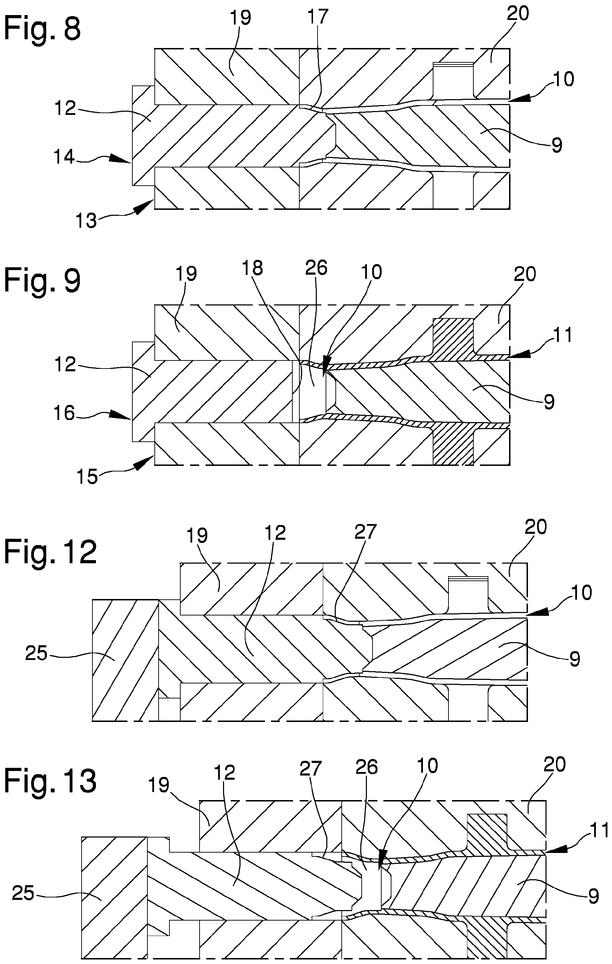

A detail of the interspace 10 delimited by the female housings 8 of the first group 13, by the auxiliary male bodies 12 of the first group 14 and by the male elements 9 in the first station 13, 14 is shown in detail in Figure 8, in which it can be seen that a part of the inner surface of the vial 2 is shaped by the first faces 17.

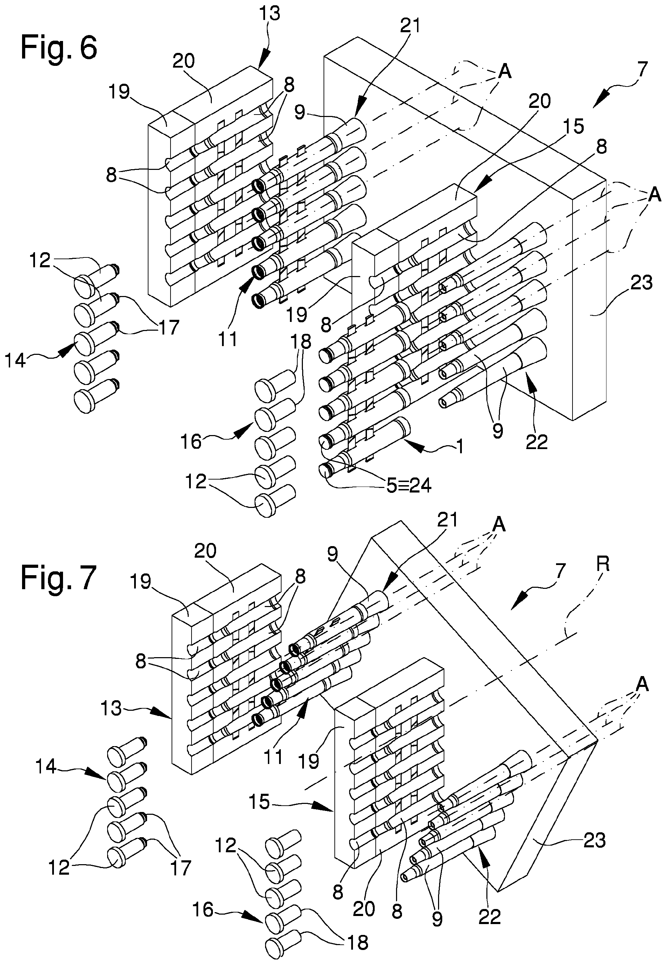

When the forming mold 7 (Figure 6) is opened, from the first station 13, 14 comes out the strip of semi-finished vials 11 made in the first material, which remains fitted on the male elements 9 to be transferred to the second station 15, 16.

The movement of the strip of semi-finished vials 11 occurs by making the plate 23 rotate around the axis of rotation R (Figure 7).

When the strip of semi-finished vials 11 and the relative male elements 9 reach the second station 15, 16, the forming mold 7 is closed again and the second material is injected into the second station 15, 16.

A detail of the interspace 10 delimited by the female housings 8 of the second group 15, by the auxiliary male bodies 12 of the second group 16 and by the male elements 9 in the second station 15, 16 is shown in detail in Figure 9, in which it can be seen that most of the interspace itself is occupied by the strip of semi-finished vials 11, except for the portions near the first ends 4a, where the different shape of the second faces 18 with respect to the first faces 17 defines an additional space 26 into which the second material is injected.

When the forming mold 7 is next opened, the strip 1 of finished vials remains on the male elements 9.

Taking into account the fact that the male elements 9 are split up into two interchangeable groups 21, 22, the two stations 13, 14, 15, 16 always receive one of the two groups 21, 22 of male elements 9 and the injection of the first material into the first station 13, 14 occurs at the same time as the injection of the second material into the second station 15, 16.

Figure 6, for example, shows a situation wherein, when the forming mold 7 is opened, a strip of semi-finished vials 11 comes out, fitted over the male elements 9 of the first group 21, together with a strip 1 of finished vials, extracted from the male elements 9 of the second group 22.

In Figure 7 the male elements 9 of the first group 21 and the relative strip of semi-finished vials 11 move from the first station 13, 14 to the second station 15, 16, while the male elements 9 of the second group 22 move from the second station 15, 16 to the first station 13, 14.

When the forming mold 7 is next opened therefore, a situation exists like that shown in Figure 6, with the difference that from the male elements 9 of the first group 21 a strip 1 of finished vials is extracted while on the male elements 9 of the second group 22 a strip of semi-finished vials 11 remains fitted.

In the fourth embodiment of the invention shown in Figure 3, the containment bodies 4 are identical to those shown in Figure 2, while the stoppers 24 have a different shape that depends on how the strip 1 is manufactured.

In this regard it is noticed that, also in this case, the strip 1 shown in Figure 3 is intended to be manufactured entirely within a single forming mold 7.

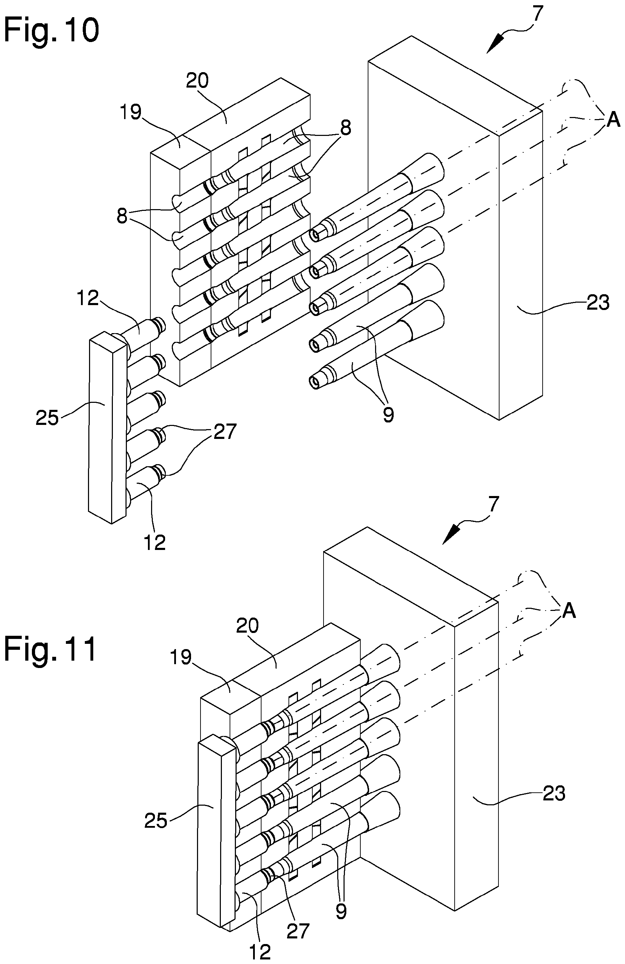

The manufacturing procedure of the strip 1 shown in Figure 3 is shown in figures 10 to 13 and, as in the previous case, comprises the steps of:
- providing the forming mold 7, having a plurality of female housings 8 and of as many male elements 9 arranged along corresponding longitudinal directions A, wherein the female housings 8 and male elements 9 can be coupled together to define at least partially an interspace 10 to form the strip 1;
- injecting under pressure the first material in the fluid state into the interspace 10;
- making the first material harden in the interspace 10 to obtain a strip of semi-finished vials 11;
- modifying the shape of the interspace 10 at least at the first ends 4a of the vials 2;
- injecting under pressure the second material in the fluid state into the modified interspace 10 directly in contact with the strip of semi-finished vials 11;
- making the second material harden in the modified interspace 10 by making the second material adhere to the strip of semi-finished vials 11 to obtain the strip 1 of finished vials in which the containment bodies 4 are made in a single monolithic body made in the first material while the stoppers 24 are made in the second material.

Even in this case, the forming mold 7 has a plurality of auxiliary male bodies 12 insertable in the female housings 8 at the first ends 4a of the vials 2 and substantially aligned with the longitudinal directions A of the male elements 9. Unlike what occurs in the forming mold 7 of the Figures 4 to 9, nevertheless, first groups 13, 15, 21 and second groups 14, 16, 22 are no longer provided of female housings 8, auxiliary male bodies 12 and male elements 9.

For the manufacturing of the strip 1, in fact, the forming mold 7 has only one group of female housings 8, only one group of auxiliary male bodies 12 and only one group of male elements 9.

The female housings 8 are obtained on two respective openable half-shells 19, 20; for simplicity of representation in Figures 10 and 11 only one of the half-shells 19, 20 is shown.

Conveniently, each half-shell 19, 20 comprises a block 19, wherein the auxiliary male bodies 12 can be accommodated, and a matrix die 20, wherein on the contrary the male elements 9 can be inserted.

Each block 19 is integral with the corresponding matrix die 20.

The male elements 9 are mounted on a male-bearing element 23 while the auxiliary male bodies 12 are mounted on a corresponding male-bearing member 25.

The male-bearing element 23, e.g., consists of a plate or the like on which the male elements 9 are mounted with the longitudinal directions A substantially orthogonal to the plate itself.

The male-bearing member 25, on the other hand, consists of a transversal support on which the auxiliary male bodies 12 are mounted substantially parallel to the longitudinal directions A.

The auxiliary male bodies 12 are movable, together with the male-bearing member 25, along the female housings 8.

By so doing, the step that consists in modifying the shape of the interspace 10 comprises moving the auxiliary male bodies 12 from a first position close to the male elements 9 to a second position spaced away from the male elements 9, the spacing away of the auxiliary male bodies 12 being able to define an additional space 26 in the interspace 10 for the introduction of the second material.

The movement of the auxiliary male bodies 12 comprises translating the auxiliary male bodies 12 along the longitudinal directions A.

Conveniently, in the first position the auxiliary male bodies 12 are in head-to-head contact with the male elements 9, while in the second position they are detached from the male elements 9.

In this respect, the fact is underlined that a face 27 of the auxiliary male bodies 12 is turned towards the male elements 9 and protrudes overhanging towards the male elements themselves.

To form the strip 1 shown in Figure 3, the forming mold 7 is closed by collocating the auxiliary male bodies 12 in the first position and the first material is injected.

A detail of the interspace 10 delimited by the female housings 8, by the male elements 9 and by the auxiliary male bodies 12 in the first position is shown in detail in Figure 12, from which it is possible to note that a part of the inner surface of the vials 2 is shaped by the faces 27.

Once the first material has been injected and left to harden, the forming mold 7 remains closed and houses the strip of semi-finished vials 11 made of the first material.

At this point, the auxiliary male bodies 12 move from the first position to the second position.

A detail of the interspace 10 delimited by the female housings 8, by the male elements 9 and by the auxiliary male bodies 12 in the second position is shown in detail in Figure 13, in which it is possible to see that most part of the interspace itself is occupied by the strip of semi-finished vials 11, except for the portions close to the first ends 4a, where the moving away of the auxiliary male bodies 12 determines the formation of the additional space 26 into which the second material is injected.

When the forming mold 7 is opened, the strip 1 of finished vials is therefore obtained which is shown in detail in Figure 3.

## Claims

1. Strip (1) of vials for fluid products, particularly for medical, pharmaceutical, cosmetic, food products or the like, comprising a plurality of vials (2), each of which comprises:
- at least a containment body (4) for at least an injectable fluid product having an elongated direction (D);
- a first end (4a) able to define a dispensing mouth (5) of said fluid product; and
- a second end (4b) opposite said first end (4a);
wherein said containment bodies (4) are made in a single monolithic body made of a first material and are joined together along the weakened-section connection lines (3);
**characterized in that** said dispensing mouths (5) consist of a stopper (24) made of a second penetrable material suitable for being penetrated by a drawing element for drawing said fluid product,
each of said vials (2) comprises a covering body (32) made in a single monolithic body together with said containment bodies (4) and able to cover said stopper (24), wherein each of said covering bodies (32) is defined by a respective door element associated with said first end (4a) by means of a foldable joining strap (33), and wherein
said door element (32) is movable around said foldable joining strap (33) between a closed configuration, wherein said door element (32) is fitted interlocking on one of said dispensing mouths (5) to protect said stopper (24), and an open configuration, wherein said door element (32) is moved away from said dispensing mouth (5) making said stopper (24) accessible from the outside.

2. Strip (1) according to claim 1, **characterized in that** each of said vials (2) comprises at least a spacing fin (6) which extends from the respective containment body (4) and which is associated with at least a spacing fin (6) of an adjacent vial (2) along one of said weakened-section connection lines (3).

3. Strip (1) according to one or more of the preceding claims, **characterized in that** at said first ends (4a) said containment bodies (4) comprise retaining means (28, 29, 30) of said stoppers (24).

4. Strip (1) according to claim 3, **characterized in that** said retaining means (28, 29, 30) comprise at least an interlocking housing seat (28, 29, 30) for housing said stoppers (24).

5. Strip (1) according to claim 4, **characterized in that** said interlocking housing seat (28, 29, 30) comprises a tubular length (28) having a first recess (29) and a second recess (30) which extend from said tubular length (28) to said elongated direction (D).

6. Strip (1) according to claim 5, **characterized in that** at least one of said first recess (29) and said second recess (30) has a substantially annular conformation.

7. Strip (1) according to one or more of the preceding claims, **characterized in that** at said first ends (4a) said containment bodies (4) comprise a countersunk seat (31) outwards, said stopper (24) being associated with said countersunk seat (31) by adhesion.

8. Strip (1) according to one or more of the preceding claims, **characterized in that** said containment bodies (4) are made by injection molding of said first material in the fluid state within a forming mold (7).

9. Strip (1) according to claim 8, **characterized in that** said stoppers (24) are made by molding of said second material within a forming seat different to said forming mold (7).

10. Strip (1) according to claim 8, **characterized in that** said stoppers (24) are made by injection molding of said second material in the fluid state within said forming mold (7), said first material and said second material being compatible so as to adhere to one another when said second material is injected under pressure directly in contact with said containment bodies (4).

## Patentansprüche

1. Streifen (1) von Fläschchen für Fluidprodukte, insbesondere für medizinische, pharmazeutische, kosmetische, Lebensmittelprodukte und dergleichen, umfassend eine Vielzahl von Fläschchen (2), von denen jedes umfasst:
- wenigstens einen Behälterkörper (4) für wenigstens ein injizierbares Fluidprodukt, der eine Längsrichtung (D) aufweist;
- ein erstes Ende (4a), das fähig ist, eine Ausgabeöffnung (5) für das Fluidprodukt zu definieren; und
- ein zweites Ende (4b) gegenüber dem ersten Ende (4a);
wobei die Behälterkörper (4) als einzelner monolithischer Körper aus einem ersten Material bestehen und entlang der Schwächungsabschnitt Verbindungslinien (3) miteinander verbunden sind;
**dadurch gekennzeichnet, dass**
die Ausgabeöffnungen (5) aus einem Stopfen (24) bestehen, der aus einem zweiten, durchdringbaren Material besteht, das zum Durchdringen durch ein Abziehelement zum Abziehen des Fluidprodukts geeignet ist,
jedes der Fläschchen (2) einen Abdeckkörper (32) umfasst, der in einem einzigen monolithischen Körper zusammen mit den Behälterkörpern (4) hergestellt ist und fähig ist, den Stopfen (24) abzudecken, wobei jeder der Abdeckkörper (32) durch ein entsprechendes Türelement definiert ist, das mithilfe einer faltbaren Verbindungslasche (33) mit dem ersten Ende (4a) verbunden ist, und wobei
das Türelement (32) um die faltbare Verbindungslasche (33) zwischen einer geschlossenen Konfiguration, in der das Türelement (32) ineinandergreifend auf einer der Ausgabeöffnungen (5) angebracht ist, um den Stopfen (24) zu schützen, und einer offenen Konfiguration, bei der das Türelement (32) von der Ausgabeöffnung (5) weg bewegt ist, um den Stopfen (24) von der Außenseite zugänglich zu machen, beweglich ist.

2. Streifen (1) gemäß Anspruch 1, **dadurch gekennzeichnet, dass** jedes der Fläschchen (2) wenigstens eine Abstandsrippe (6) umfasst, die von dem entsprechenden Behälterkörper (4) wegragt und die entlang einer der Schwächungsabschnitt Verbindungslinien (3) mit wenigstens einer Abstandsrippe (6) eines benachbarten Fläschchens (2) verbunden ist.

3. Streifen (1) gemäß einem oder mehreren der vorstehenden Ansprüche, **dadurch gekennzeichnet, dass** die Behälterkörper (4) an den ersten Enden (4a) Halteelemente (28, 29, 30) für die Stopfen (24) umfassen.

4. Streifen (1) gemäß Anspruch 3, **dadurch gekennzeichnet, dass** die Halteelemente (28, 29, 30) wenigstens einen ineinandergreifenden Aufnahmesitz (28, 29, 30) zum Aufnehmen der Stopfen (24) umfassen.

5. Streifen (1) gemäß Anspruch 4, **dadurch gekennzeichnet, dass** der ineinandergreifende Aufnahmesitz (28, 29, 30) eine rohrförmige Länge (28) umfasst, das eine erste Vertiefung (29) und eine zweite Vertiefung (30) aufweist, die von der rohrförmigen Länge (28) zu der Längsrichtung (D) verlaufen.

6. Streifen (1) gemäß Anspruch 5 **dadurch gekennzeichnet, dass** der wenigstens eine von der ersten Vertiefung (29) und der zweiten Vertiefung (30) eine im Wesentlichen ringförmige Konformation aufweist.

7. Streifen (1) gemäß einem oder mehreren der vorstehenden Ansprüche, **dadurch gekennzeichnet, dass** die Behälterkörper (4) an den ersten Enden (4a) einen nach außen angesenkten Sitz (31) umfassen, wobei der Stopfen (24) durch Adhäsion mit dem angesenkten Sitz (31) verbunden ist.

8. Streifen (1) gemäß einem oder mehreren der vorstehenden Ansprüche, **dadurch gekennzeichnet, dass** die Behälterkörper (4) durch Spritzguss des ersten Materials im Fluidzustand in einem Formwerkzeug (7) hergestellt sind.

9. Streifen (1) gemäß Anspruch 8, **dadurch gekennzeichnet, dass** die Stopfen (24) durch Formen des zweiten Materials in einem Formsitz, der von dem Formwerkzeug (7) verschieden ist, hergestellt sind.

10. Streifen (1) gemäß Anspruch 8, **dadurch gekennzeichnet, dass** die Stopfen (24) durch Spritzguss des zweiten Materials im Fluidzustand in dem Formwerkzeug (7) hergestellt sind, wobei das erste Material und das zweite Material miteinander verträglich sind, so dass sie aneinander haften, wenn das zweite Material unter Druck direkt in Kontakt mit den Behälterkörpern (4) eingespritzt wird.

## Revendications

1. Bande (1) de flacons pour produits fluides, notamment pour des produits médicaux, pharmaceutiques, cosmétiques, alimentaires ou analogues, comprenant une pluralité de flacons (2), dont chacun comprend :
- au moins un corps de contenant (4) pour au moins un produit fluide injectable ayant une direction allongée (D) ;
- une première extrémité (4a) pouvant définir une embouchure de distribution (5) dudit produit fluide ; et
- une seconde extrémité (4b) opposée à ladite première extrémité (4a) ;
dans laquelle lesdits corps de contenant (4) sont réalisés en un corps monolithique unique réalisé en un premier matériau et sont reliés les uns aux autres le long de lignes de raccord à zone affaiblie (3) ;
**caractérisée en ce que**
lesdites embouchures de distribution (5) sont constituées d'un obturateur (24) réalisé en un second matériau pénétrable pouvant être pénétré par un élément d'aspiration pour aspirer ledit produit fluide,
chacun desdits flacons (2) comprend un corps de couverture (32) réalisé en un corps monolithique unique conjointement avec lesdits corps de contenant (4) et étant en mesure de couvrir ledit obturateur (24), dans lequel chacun desdits corps de couverture (32) est défini par un élément de porte respectif associé à ladite première extrémité (4a) au moyen d'une lanière de jonction pliable (33), et dans lequel ledit élément de porte (32) est mobile autour de ladite lanière de jonction pliable (33) entre une configuration fermée, dans laquelle ledit élément de porte (32) est ajusté en verrouillage sur l'une desdites embouchures de distribution (5) pour protéger ledit obturateur (24), et une configuration ouverte, dans laquelle ledit élément de porte (32) est éloigné de ladite embouchure de distribution (5) rendant ledit obturateur (24) accessible depuis l'extérieur.

2. Bande (1) selon la revendication 1, **caractérisée en ce que** chacun desdits flacons (2) comprend au moins une ailette d'espacement (6) qui s'étend depuis le corps de contenant (4) respectif et qui est associée à au moins une ailette d'espacement (6) d'un un flacon adjacent (2) le long de l'une desdites lignes de raccord à zone affaiblie (3).

3. Bande (1) selon une ou plusieurs des revendications précédentes, **caractérisée en ce qu'**au niveau desdites premières extrémités (4a) lesdits corps de contenant (4) comprennent des moyens de retenue (28, 29, 30) desdits obturateurs (24).

4. Bande (1) selon la revendication 3, **caractérisée en ce que** lesdits moyens de retenue (28, 29, 30) comprennent au moins un siège de logement de verrouillage (28, 29, 30) pour loger lesdits obturateurs (24).

5. Bande (1) selon la revendication 4, **caractérisée en ce que** ledit siège de logement de verrouillage (28, 29, 30) comprend une longueur tubulaire (28) ayant un premier évidement (29) et un second évidement (30) qui s'étendent depuis ladite longueur tubulaire (28) jusqu'à ladite direction allongée (D).

6. Bande (1) selon la revendication 5, **caractérisée en ce qu'**au moins l'un parmi ledit premier évidement (29) et ledit second évidement (30) a une conformation sensiblement annulaire.

7. Bande (1) selon une ou plusieurs des revendications précédentes, **caractérisée en ce qu'**au niveau desdites premières extrémités (4a) lesdits corps de contenant (4) comprennent un siège fraisé (31) vers l'extérieur, ledit obturateur (24) étant associé audit siège fraisé (31) par adhésion.

8. Bande (1) selon une ou plusieurs des revendications précédentes, **caractérisée en ce que** lesdits corps de contenant (4) sont réalisés par moulage par injection dudit premier matériau à l'état fluide à l'intérieur d'un moule de formage (7).

9. Bande (1) selon la revendication 8, **caractérisée en ce que** lesdits obturateurs (24) sont réalisés par moulage dudit second matériau à l'intérieur d'un siège de formage différent dudit moule de formage (7).

10. Bande (1) selon la revendication 8, **caractérisée en ce que** lesdits obturateurs (24) sont réalisés par moulage par injection dudit second matériau à l'état fluide à l'intérieur dudit moule de formage (7), ledit premier matériau et ledit second matériau étant compatibles de sorte à adhérer l'un à l'autre lorsque ledit second matériau est injecté sous pression directement en contact avec lesdits corps de contenant (4).
